# EUROPEAN PATENT SPECIFICATION

(11) **EP 1 998 307 B1**
(45) Date of publication and mention of the grant of the patent: **11.12.2013**
(21) Application number: 08103128.8
(22) Date of filing: 28.03.2008
(51) Int. Cl.: G09F 3/14, G09G 5/00

(54) **Display apparatus and control method of the same**
Anzeigevorrichtung und Steuerverfahren dafür
Appareil d'affichage et procédé de commande de celui-ci

(30) Priority: 31.05.2007 KR 20070053122
(43) Date of publication of application: 03.12.2008
(73) Proprietor: Samsung Electronics Co., Ltd., Suwon-si, Gyeonggi-do, 443-742 (KR)
(72) Inventor: Kim, Tai-gyu, Gyeonggi-do (KR); Kim, Young-chan, Gyeonggi-do (KR)
(74) Representative: Grootscholten, Johannes A.M.

(56) References cited:
- EP-A- 1 256 922
- DE-A1- 10 153 659
- US-A- 4 727 544
- US-A1- 2005 062 735

## Description

### BACKGROUND

### Field of Invention

Apparatuses and methods consistent with the present invention relate to a display apparatus and a control method thereof, and more particularly, to a display apparatus which stores a display identification data and a control method thereof.

### Description of the Related Art

As a display apparatus which includes a liquid crystal display (LCD) panel becomes widespread, interface between the display apparatus and an image source increasingly adopts a digital interface type instead of a related art analog interface type. Most display apparatuses which are currently made adopt a digital interface of a digital video interface (DVI) type which uses a transition minimized differential signaling (TMDS) technology as a digital interface standard provided by a digital display working group (DDWG).

The display apparatus transmits display identification data to an external device via a DVI connector, when the DVI connector is connected to the external device which includes a graphic card. Here, a communication method of the display apparatus transmitting the display identification data to an image source is referred to as a display data channel (DDC). The DDC is to perform an automatic configuration, e.g., a plug-and-play, on a video display system.

A display identification data is stored in a memory when the display apparatus is manufactured, and a protection function is set up for the memory so that the display identification data is not damaged. The protection function does not allow a new data to be written in the memory. However, if a hardware problem occurs, e.g., a power state in the image source or the display apparatus is not normal, or a software problem occurs, e.g., an error occurs in the display apparatus, the protection function does not perform properly. Thus, a data from an external apparatus may be stored in the memory which lost the protection function, and the display identification data may be deleted or transformed.

If the foregoing problems occur, a video signal is not normally displayed on the display apparatus and a user may not even recognize the errors generated in the display apparatus.

A display apparatus according to the preamble of claim 1 is known from US 2005/062735 Al. A further display apparatus is known from EP-A-1 256 922.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above.

Accordingly, it is an aspect of the present invention to provide a display apparatus which is capable of easily determining whether an error occurs in display identification data and a control method of the same.

Another aspect of the present invention is to provide a display apparatus which easily notifies a user of an error if the error occurs in display identification data and a control method of the same.

Still another aspect of the present invention is to provide a display apparatus which recovers display identification data where an error occurs and a control method of the same.

Additional aspects of the present invention will be set forth in part in the description which follows and, in part, will be obvious from the description, or may be learned by practice of the present invention.

The foregoing and/or other aspects of the present invention can be achieved by providing a display apparatus as defined in claim 1.

According to an aspect of the invention, the display apparatus further includes an external apparatus connecting part where an external apparatus to supply a video signal is connected, wherein the controller blocks the external apparatus from access to the second storage unit.

According to an aspect of the invention, the external apparatus connecting part provides a digital video signal, and the controller blocks the external apparatus from access to the first storage unit when the identification data checking process starts.

According to the invention, the controller calculates an inspective check data from the display identification data stored in the first storage unit via the data processing method, and compares the inspective check data with the comparative check data to inspect whether there is an error in the display identification data.

According to an aspect of the invention, the display apparatus further includes a user interface generating unit which generates a user interface information to be displayed on the display, wherein the controller controls the user interface generating unit to display a result from the identification data checking process on the display.

The foregoing and/or other aspects of the present invention can be achieved by providing a control method of a display apparatus as defined in claim 9. According to an aspect of the invention, the checking of the identification data is performed every predetermined period.

According to an aspect of the invention, the control method further includes generating a user interface information so that a result from the checking of the identification data is displayed on the display.

According to the invention, the control method further includes backing up the display identification data and the comparative check data before the calculating the inspective check data, and storing the backup display identification data and comparative check data in the storage unit if determined that the error occurs in the display identification data.

According to an aspect of the invention, the display apparatus further includes an external apparatus connecting part where an external apparatus to supply a digital video signal is connected, the control method further including blocking the external apparatus from access to the storage unit.

According to an aspect of the invention, the control method further includes generating a user interface information so that a result from the checking the identification data is displayed on the display.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a control block diagram of a display apparatus according to a first exemplary embodiment not forming part of the present invention ;
FIG. 2 is a control block diagram of a display apparatus according to a second exemplary embodiment not forming part of the present invention;
FIG. 3 is a flow chart illustrating a control method of the display apparatus according to the second exemplary embodiment;
FIGS. 4A and 4B illustrate an error notice window in the display apparatus according to the second exemplary embodiment;
FIG. 5 is a control block diagram of a display apparatus according to a third exemplary embodiment not forming part of the present invention;
FIG. 6 is a flow chart illustrating a control method of the display apparatus according to the third exemplary embodiment;
FIG. 7 is a control block diagram of a display apparatus according to an embodiment of the present invention; and
FIG. 8 is a flow chart illustrating a control method of a display apparatus according to the embodiment of the present invention.

### DETAILED DESCRIPTION OF EXEMPLARY EMBODIMENTS

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

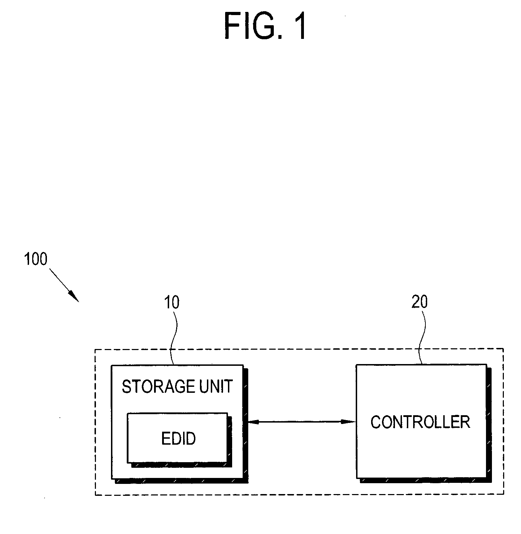

Referring to FIG. 1, a display apparatus 100 according to a first exemplary embodiment not forming part of the present invention includes a storage unit 10 and a controller 20.

The storage unit 10 stores a display identification data and a comparative check data obtained from the display identification data by a preset data processing method. The display identification data may include an extended display identification data (EDID) such as a manufacturer/manufactures identification (ID) of a display apparatus, specifications of a display apparatus and support timing. The display apparatus 100 supplies the display identification data stored in the storage unit 10 to an external apparatus, if the external apparatus which supplies a video source requests the display identification data.

A comparative check data refers to a checksum to inspect errors of one form of redundancy check to detect errors in data. In other words, a comparative check data is a value obtained by processing a data corresponding to a display identification data according to a preset data processing method e.g., logical product, logical sum, exclusive logical sum, or the like.

The storage unit 10 may include a non-volatile memory in the display apparatus 100, e.g., an electrically erasable and programmable read-only memory (EEPROM), a programmable read-only memory (PROM), a micro control unit (MCU), etc.

The controller 20 has access to the display identification data stored in the storage unit 10 by a communication method and reads out the display identification data to perform an identification data checking process to determine whether there is an error in the display identification data. The controller 20 calculates an inspective check data via the foregoing data processing method, and compares the inspective check data with the comparative check data to determine whether they are the same. The controller 20 determines that the display identification data is normal if the inspective check data matches the comparative check data. On the other hand, the controller 20 determines that there is an error in the display identification data if the inspective check data does not correspond to the comparative check data. The controller 20 may determine whether an error occurs in the display identification data every predetermined period, and accordingly it may further include an inspective signal outputting unit which outputs an inspective signal to perform the identification data checking process periodically. If the identification data checking process is performed every predetermined period, it is easily determined whether an error occurs in the display identification data, thereby improving a display configuration of a video signal.

Also, if errors such as malfunction of power supply or a communication disturbance generated outside the display apparatus 100 occur, the display apparatus 100 may further include a sensor which detects the foregoing error, thereby performing the identification data checking process.

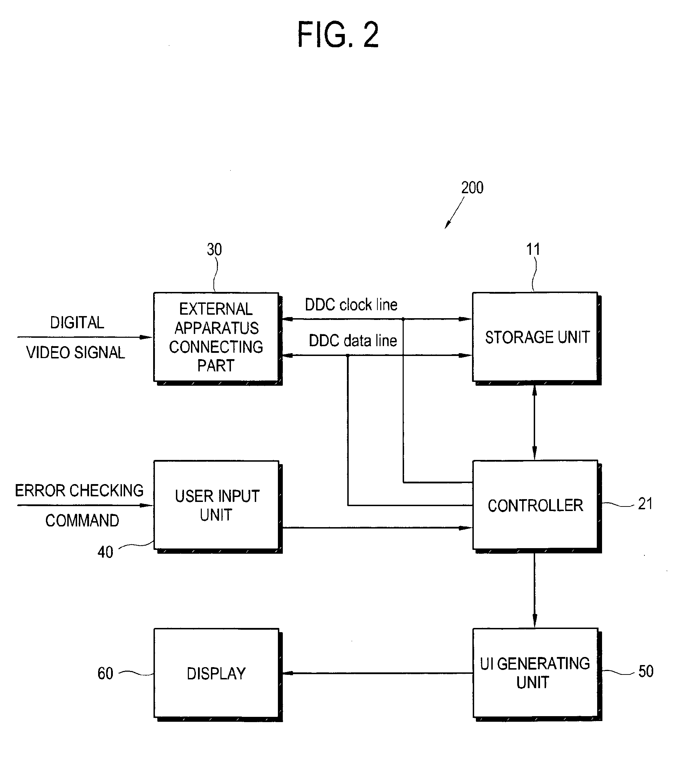

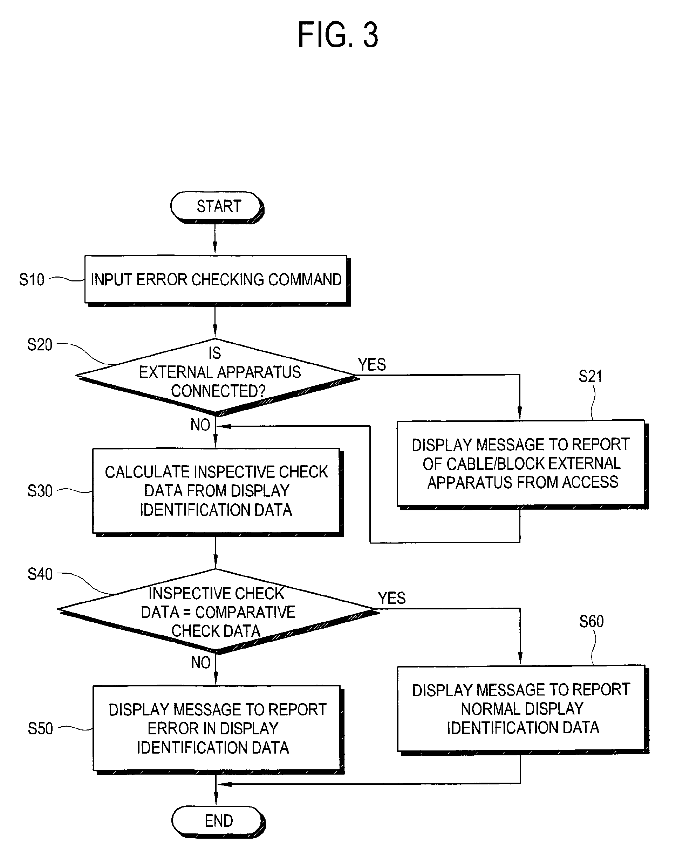

FIG. 2 is a control block diagram of a display apparatus according to a second exemplary embodiment not forming part of the present invention and FIG. 3 is a flow chart illustrating a control method of the display apparatus according to the second exemplary embodiment not forming part of the present invention.

Referring to FIGS. 2 and 3, the display apparatus 200 according to the present exemplary embodiment includes an external apparatus connecting part 30, a user input unit 40, a user interface (UI) generating unit 50 and a display 60 in addition to a storage unit 11 and a controller 21. It should be noted that the storage unit 11 and the controller 21 will not be explained repeatedly, which have the same features as those in the first exemplary embodiment.

The external apparatus connecting part 30 includes a connector where an external apparatus (not shown) to apply a video signal is connected, and an interface between the external apparatus and the display apparatus 200. In the present exemplary embodiment, a video signal which is input via the external apparatus connecting part 30 is a digital video signal, and the display apparatus 200 adopts a digital video interface (DVI) type which uses a transition minimized differential signaling (TMDS) technology as a digital interface standard provided by a digital display working group (DDWG). Thus, the external apparatus connecting part 30 may include a digital visual interface-digital and analog (DVI-I) connector, a digital visual interface-digital only (DVI-D) connector or a high definition multimedia interface (HDMI) connector, which employ a DVI type.

According to a display data channel (DDC) communication standard to transmit a display identification data to the external apparatus, if a data is exchanged between the external apparatus and the display apparatus 200, a signal line and an order to exchange a data is provided. A DDC data line which is a bidirectional serial data line, and a DDC clock line which is a serial clock line used as a clock, are used for signal lines in the DDC communication. An external apparatus which supplies a digital video signal requests a display identification data in the storage unit 11 through the external apparatus connecting part 30, or directly reads out a display identification data from the storage unit 11. That is, as shown in FIG. 2, the external apparatus connecting part 30 and the storage unit 11 may communicate with each other via the DDC data line and the DDC clock line independently without control by an external apparatus.

The user input unit 40 is provided to input an error check. A user outputs an error checking command to the controller 21 through the user input unit 40 if power supply of an external apparatus malfunctions or a video signal is not properly displayed on the display apparatus 200. Further, the user may set up the controller 21 to perform an identification data checking process periodically via the user input unit 40.

The user input unit 40 includes a shortcut key provided outside the display apparatus 200 or a hidden key provided therein. The user input unit 40 includes a signal processor (not shown) which receives and processes an input control signal via the shortcut key or the hidden key and outputs the control signal to the controller 21 as an error checking command.

The UI generating unit 50 generates a UI information which shows a result from an identification data checking process of the controller 21, and displays the UI information on the display 60.

The display 60 displays a video signal from the external apparatus and a UI information and may be provided as a panel such as a liquid crystal display (LCD), a plasma display panel (PDP), an organic light emitting display (OLED), etc. The display 60 includes a video signal processor (not shown) to process a video signal into a signal with a suitable format for the foregoing panels.

The controller 21 performs an identification data checking process if an error checking command is input through the user input unit 40. Then, the controller 21 controls the UI generating unit 50 to display a result from the identification data checking process on the display 60. Hereinafter, a control method by the controller 21 will be explained with reference to FIG. 3.

If an error checking command is input from the user input unit 40 (S10) or a predetermined period elapses, the controller 21 determines whether an external apparatus is connected to the display apparatus 200 via the external apparatus connecting part 30 (S20). If the external apparatus has a graphic card which supplies a digital video signal, it can have access to the storage unit 11, as described above, and may input/output data through the external apparatus connecting part 30 during an identification data checking process. In this case, the controller 21 may only keep communicating with the storage unit 11 and block access of the external apparatus through the external apparatus connecting part 30 so as to prevent from occurring of errors due to other communications. If the external apparatus is connected, the controller 21 displays a message on the display 60 to release a cable where the external apparatus is connected or forces the external apparatus not to have access to the storage unit 11 (S21). The user may detach the external apparatus from the display apparatus 200 on the message displayed on the display 60.

Then, the controller 21 calculates an inspective check data from the display identification data stored in the storage unit 11 by a data processing method (S30). In the present exemplary embodiment, the controller 21 performs an exclusive logical sum (XOR) to calculate a data corresponding to the display identification data and to get an inspective check data.

The controller 21 determines whether the calculated inspective check data matches the comparative check data, thereby deciding whether there is an error in the display identification data (S40).

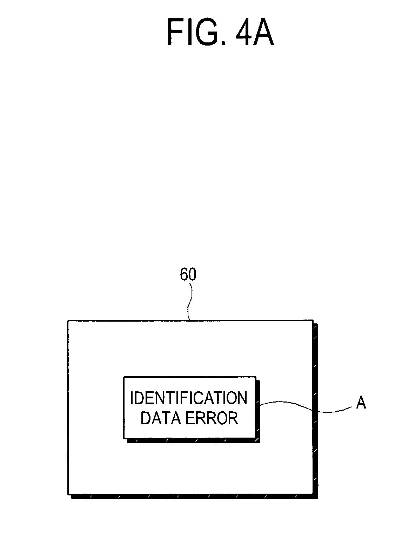

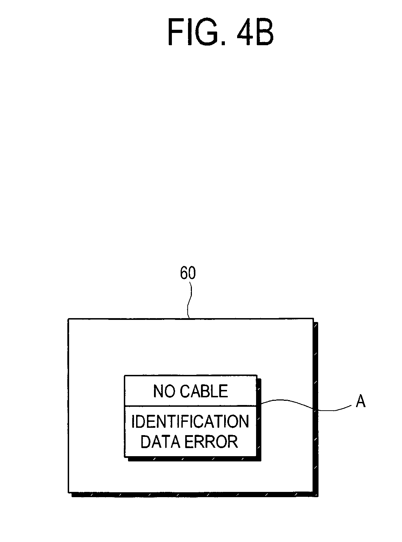

If the inspective check data does not correspond to the comparative check data, it is determined that an error occurs in the display identification data, and accordingly the controller 21 controls the UI generating unit 50 to display an error reporting window (A) as a UI information on the display 60 (S50). FIG. 4A and 4B illustrate an error reporting message displayed on the display 60. An error reporting window (A) in FIG. 4A displays a message of "identification data error" only, and an error reporting window (A) in FIG. 4B displays a sign of "NO CABLE" to report that a cable of an external apparatus is not connected to the display apparatus 200 in addition to the message of "identification data error."

On the contrary, if the inspective check data matches the comparative check data, it is determined that an error does not occur in the display identification data, and accordingly the controller 21 controls the UI generating unit 50 to display a UI information which reports that the display identification data is normal on the display 60 (S60).

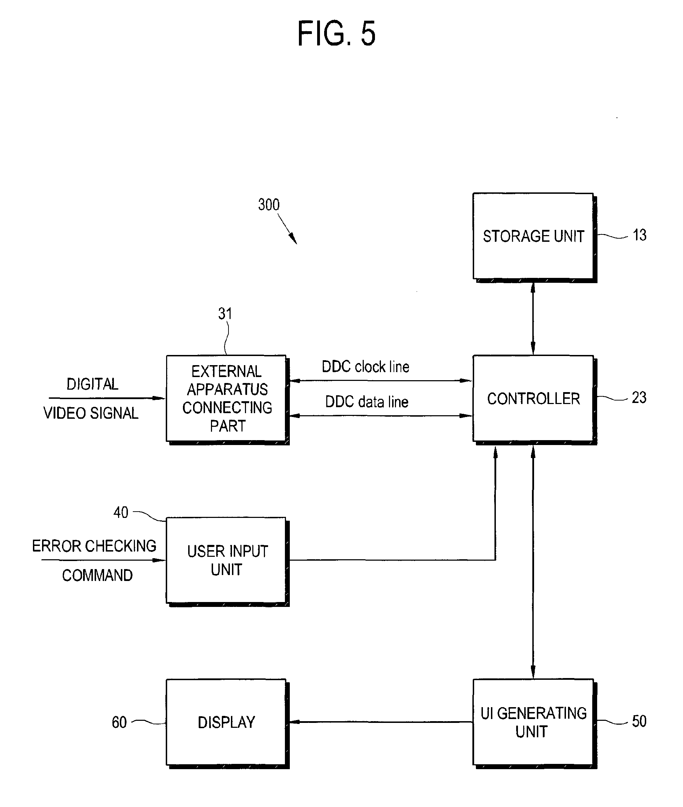

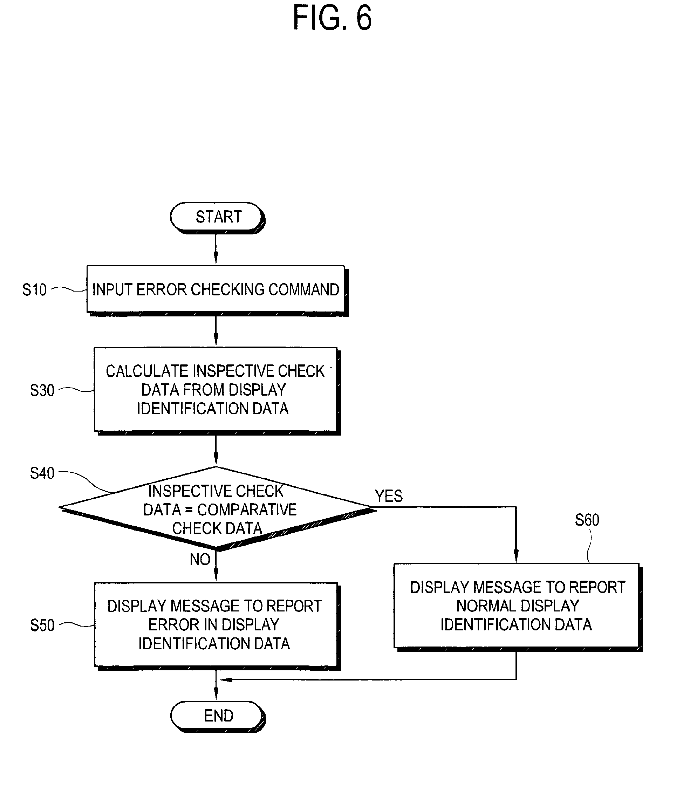

FIG. 5 is a control block diagram of a display apparatus according to a third exemplary embodiment not forming part of the present invention and FIG. 6 is a flow chart illustrating a control method of the display apparatus according to the present exemplary embodiment.

The display apparatus 300 according to the third exemplary embodiment receives an analog video signal from an external apparatus connecting part 31. The external apparatus connecting part 31 includes a digital visual interface-digital and analog (DVI-I) connector or a digital visual interface-analog only (DVI-A) connector.

In this case, a controller 23 transmits a display identification data in a storage unit 13 to an external apparatus via the external apparatus connecting part 31. That is, the storage unit 13 in the present exemplary embodiment provides the display identification data to the external apparatus through the controller 23 and does not communicate directly with the external apparatus connecting part 31, unlike the storage unit 10 in the first exemplary embodiment. Except for communications between the controller 23 and the storage unit 13 or the external apparatus connecting part 31, the controller 23 performs the same identification data checking process in the aforementioned exemplary embodiments.

To sum up with reference to FIG. 6, if an error checking command is input (S10), the controller 23 calculates an inspective check data from the display identification data (S30). Then, the controller 23 determines whether the inspective check data matches the comparative check data (S40).

If the inspective check data does not correspond to the comparative check data, the controller 23 displays a message to report an error in the display identification data on the display 60 (S50). If the inspective check data matches the comparative check data, the controller 23 displays a message to report that the display identification data is normal on the display 60 (S60).

In the present exemplary embodiment, the controller 23 does not need to determine whether the external apparatus is connected to the display apparatus 300.

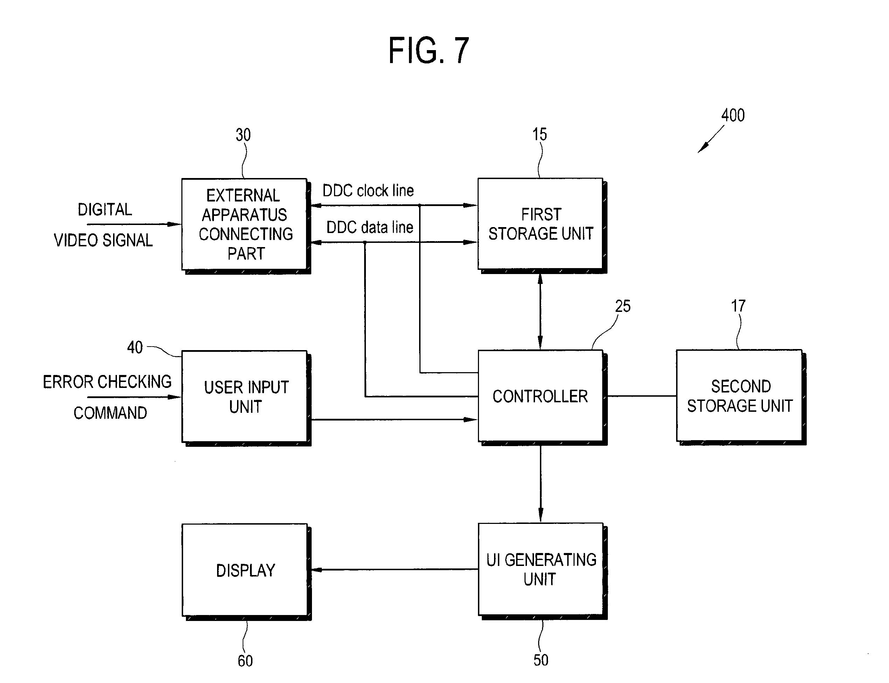

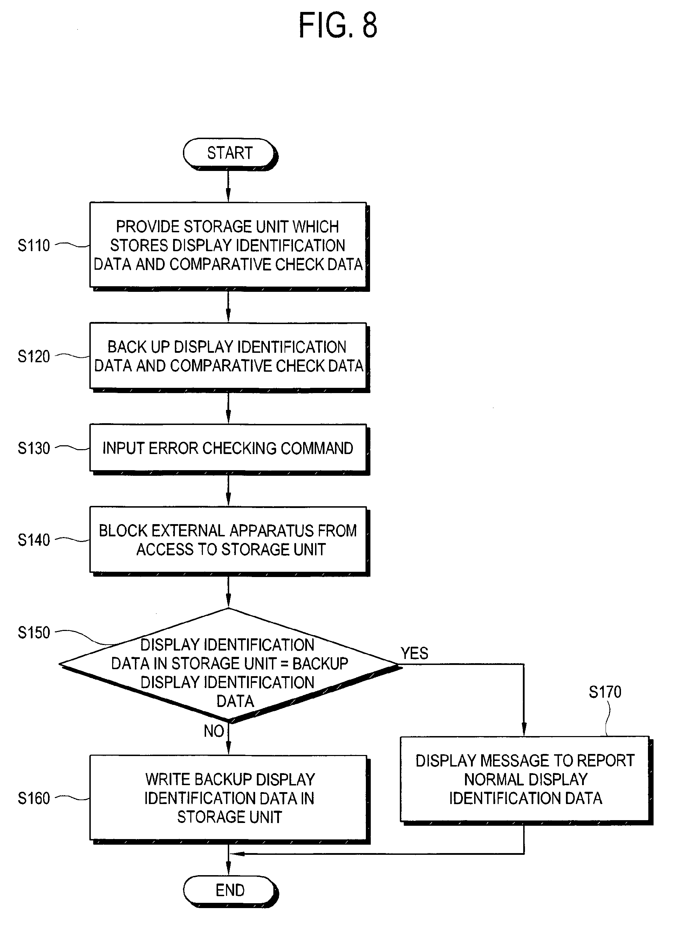

FIG. 7 is a control block diagram of a display apparatus according to an embodiment of the present invention and FIG. 8 is a flow chart illustrating a control method of the display apparatus according to this embodiment.

The display apparatus 400 according to the embodiment of the invention includes a first storage unit 15 and a second storage unit 17 which stores a display identification data and a comparative check data. The first storage unit 15 and the second storage unit 17 may be provided as an electrically erasable and programmable read-only memory (EEPROM) or the like, and a protection function is set up for the storage units 15 and 17.

The display identification data and the comparative check data in the second storage unit 17 are the data which a controller 25 backs up when an external apparatus is connected to the display apparatus 400 and requests the display identification data at first. That is, the storage unit 17 stores an initial display identification data and an initial comparative check data where an error does not occur.

The first storage unit 15 is connected to an external apparatus connecting part 30 to provide the display identification data to the external apparatus, while the second storage unit 17 is not directly connected to the external apparatus. That is, the external apparatus may have direct access to the first storage unit 15 but is blocked to access to the second storage unit 17. Thus, a data in the first storage unit 15 connected directly to the external apparatus connecting part 30 may be damaged or produce an error by the external apparatus, but a data in the second storage unit 17 is hardly to produce an error. In other words, the display identification data in the first storage unit 15 may be changed from an initial display identification data, while the display identification data in the second storage unit 17 maintains an initial backup display identification data which can be served as a reference value to determine whether an error occurs.

Alternatively, the display identification data and the comparative check data are not backed up by the controller 25 to be stored in the second storage unit 17, but the same data as the display identification data and the comparative check data in the first storage unit 15 are stored in the second storage unit 17 when the display apparatus 400 is manufactured.

The control method of the display apparatus 400 according to the present embodiment of the invention will be described with reference to FIG. 8.

The first storage unit 15 is provided to store the display identification data and the comparative check data is provided (S110). If the display identification data is requested for the first time by the external apparatus, the controller 25 backs up the display identification data and the comparative check data stored in the first storage unit 15 into the second storage unit 17 (S120).

Then, if an error checking command is input via user input unit 40 (S130), the controller 25 blocks access of the external apparatus to the first storage unit 15 (S140).

Here, referring to FIG. 3, a user interface information to report that a cable is released may be provided to the user.

The controller 25 compares the display identification data stored in the first storage unit 15 with the backup display identification data in the second storage unit 17 and determines whether they are matched with each other (S150).

If the display identification data in the storage units 15 and 17 do not correspond to each other, the controller 25 determines that an error occurs in the display identification data and writes, i.e., restores, the backup display identification data in the second storage unit 17 into the first storage unit 15 (S160). Namely, the controller 25 recovers a display identification data where an error occurs using the backup display identification data. In the present embodiment of the invention, since the controller 25 not only determines whether there is an error in a display identification data but also recovers the display identification data with the error, the display apparatus 400 displays a video signal normally. Owing to the foregoing function of the controller 25, a user may easily solve problems of the display apparatus 400 of not displaying a video signal normally due to an error in the display identification data without asking a manufacturer.

If the display identification data stored in the storage units 15 and 17 are matched with each other, the controller 25 controls a UI generating unit 50 to display a user interface (UI) information to report that the display identification data is normal on the display 60 (S170).

The controller 25 may calculate an inspective check data and determines whether there is an error in the display identification data without comparing the display identification data stored in the storage units 15 and 17 with each other, as in the foregoing exemplary embodiments.

In the present embodiment of the invention, a control method of the display apparatus 400 receiving a digital video signal is illustrated, but the same control method is applicable to a display apparatus receiving an analog video signal. The controller 25 may store the backup display identification data in the first storage unit 15 after determining whether an error occurs in the display identification data.

Alternatively, the display apparatus 400 does not include the additional second storage unit 17 and the controller 25 backs up the display identification data and the comparative check data in a storage unit provided in the controller 25. That is, it may not be necessary to provide the second storage unit 17 as a separate storage unit from the controller 25. Also, the first storage unit 15 and the second storage unit 17 may be provided in a single configuration. That is, the storage units 15 and 17 may not be provided separately as long as they are formed into two independent regions which can communicates with the controller 25 through different accessibilities to an external apparatus.

Alternatively, the display apparatus 400 includes a storage unit which stores both a display identification data on a digital video signal and a display identification data on an analog video signal, and outputs a corresponding display identification data to an input video signal to the external apparatus. In this case, the display apparatus 400 backs up the respective display identification data in an additional storage unit which the external apparatus can not access to, and then uses the necessary display identification data.

As described above, the present invention provides a display apparatus which is capable of easily determining whether an error occurs in display identification data and a control method of the same.

Also, the present invention is to provide a display apparatus which easily notifies a user of an error if the error occurs in display identification data and a control method of the same.

Further, the present invention provides a display apparatus which recovers display identification data where an error occurs and a control method of the same.

## Claims

1. A display apparatus (400) comprising:
a first storage unit (15) configured to store a display identification data and a comparative check data obtained from the display identification data, said first storage unit (15) capable of being accessed by an external apparatus;
a second storage unit (17) configured to store a back-up of the display identification data and the comparative check data, wherein access to said second storage unit (17) by said external apparatus is blocked; and
a controller (25) configured to perform an identification data checking process to determine whether there is an error in the display identification data stored in the first storage unit (15) and to store the display identification data and the comparative check data backed up in the second storage unit (17) in the first storage unit (15) if an error is determined;
wherein the controller (25) is configured to calculate an inspective check data from the display identification data stored in the first storage unit (15), and to compare the inspective check data with the comparative check data stored in the first storage unit (15) to inspect whether there is the error in the display identification data;
**characterized in that** the controller (25) is further configured to back up the display identification data and the comparative check data stored in the first storage unit (15) into the second storage unit (17) when said external apparatus is connected to the display apparatus (400) and requests said display identification data for the first time;
wherein the first and second storage units (15, 17) are electrically erasable and programmable read-only memories (EEPROMs).

2. The display apparatus (400) according to claim 1, further comprising an external apparatus connecting part (30) configured to connect said external apparatus to supply a video signal.

3. The display apparatus (400) according to claim 2, wherein the external apparatus connecting part is configured to provide a digital video signal, and the controller (25) is configured to block the external apparatus from access to the first storage unit (15) if the identification data checking process starts.

4. The display apparatus (400) according to claim 1, further comprising a user interface generating unit (50) configured to generate a user interface information to be displayed on a display unit (60), wherein the controller (25) is configured to control the user interface generating unit (50) to display a result from the identification data checking process on the display unit (60).

5. The display apparatus (400) according to claim 1, wherein the first storage unit (15) and the second storage unit (17) relate to two independent regions in a single storage configuration.

6. The display apparatus (400) according to claim 1, wherein the second storage unit (17) is comprised by the controller (25).

7. The display apparatus (400) according to claim 1, wherein the comparative check data comprises a checksum.

8. The display apparatus (400) according to claim 1, wherein the display identification data comprises an extended display identification data (EDID).

9. A control method of a display apparatus (400), the apparatus comprising a first storage unit (15) which stores a display identification data and a comparative check data obtained from the display identification data, and a second storage unit (17), the method comprising:
calculating an inspective check data from the display identification data stored in the first storage unit (15);
checking the display identification data stored in the first storage unit (15) by comparing the inspective check data and the comparative check data from the first storage unit (15) to determine whether an error occurs in the display identification data stored in first storage unit (15); and
storing the display identification data and the comparative check data backed up in the second storage unit (17) in the first storage unit (15) if an error is determined;
**characterized by** backing up of the display identification data and the comparative check data when said external apparatus is being connected to the display apparatus (400) and requests said display identification data for the first time;
wherein the first and second storage units (15, 17) are electrically erasable and programmable read-only memories (EEPROMs).

10. The control method according to claim 9, wherein the checking of the identification data is performed every predetermined period.

11. The control method according to claim 9, further comprising generating a user interface information so that a result from the checking of the identification data is displayed on a display unit (60).

12. The control method according to any of claims 9-11, wherein the display apparatus (400) comprises an external apparatus connecting part (30); and the control method further comprises blocking an external apparatus access to the first storage unit (15) when the external apparatus connecting part (30) is connected to the external apparatus and the identification data checking process starts.

13. The control method according to claim 9, further comprising generating a user interface information so that a result from checking the identification data is displayed on a display unit (60).

14. The control method according to any of claims 9-13, wherein the comparative check data comprises a checksum.

15. The control method according to any of claims 9-14, wherein the display identification data comprises an extended display identification data (EDID).

## Patentansprüche

1. Anzeigevorrichtung (400), umfassend:
eine erste Speichereinheit (15), die konfiguriert ist, um Anzeigeidentifikationsdaten und aus den Anzeigeidentifikationsdaten gewonnene Vergleichsprüfdaten zu speichern, wobei auf die erste Speichereinheit (15) durch eine externe Vorrichtung zugegriffen werden kann;
eine zweite Speichereinheit (17), die konfiguriert ist, um ein Back-up der Anzeigeidentifikationsdaten und der Vergleichsprüfdaten zu speichern, wobei ein Zugriff durch die externe Vorrichtung auf die zweite Speichereinheit (17) gesperrt ist; und
einen Controller (25), der konfiguriert ist, um einen Identifikationsdaten-Überprüfungsvorgang durchzuführen, um festzustellen, ob ein Fehler in den Anzeigeidentifikationsdaten vorliegt, die in der ersten Speichereinheit (15) gespeichert sind, und um die Anzeigeidentifikationsdaten und die Vergleichsprüfdaten, die in der zweiten Speichereinheit (17) gesichert sind, in der ersten Speichereinheit (15) zu speichern, falls ein Fehler festgestellt wird;
wobei der Controller (25) konfiguriert ist, um Kontrollprüfdaten aus den Anzeigeidentifikationsdaten zu berechnen, die in der ersten Speichereinheit (15) gespeichert sind, und um die Kontrollprüfdaten mit den Vergleichsprüfdaten, die in der ersten Speichereinheit (15) gespeichert sind, zu vergleichen, um zu kontrollieren, ob ein Fehler in den Anzeigeidentifikationsdaten vorliegt; **dadurch gekennzeichnet, dass** der Controller (25) weiterhin konfiguriert ist, um die Anzeigeidentifikationsdaten und die Vergleichsprüfdaten, die in der ersten Speichereinheit (15) gespeichert sind, in der zweiten Speichereinheit (17) zu sichern, wenn die externe Vorrichtung an die Anzeigevorrichtung (400) angeschlossen wird und die Anzeigeidentifikationsdaten zum ersten Mal abfragt;
wobei die erste und die zweite Speichereinheit (15, 17) elektrisch löschbare und programmierbare Nurlesespeicher (EEPROMs) sind.

2. Anzeigevorrichtung (400) nach Anspruch 1, die weiterhin einen Teil (30) zum Anschluss einer externen Vorrichtung umfasst, der konfiguriert ist, um die externe Vorrichtung anzuschließen, damit sie ein Videosignal zuführt.

3. Anzeigevorrichtung (400) nach Anspruch 2, wobei der Teil zum Anschluss einer externen Vorrichtung konfiguriert ist, um ein digitales Videosignal bereitzustellen, und der Controller (25) konfiguriert ist, um den Zugriff der externen Vorrichtung auf die erste Speichereinheit (15) zu sperren, falls der Identifikationsdaten-Überprüfungsvorgang beginnt.

4. Anzeigevorrichtung (400) nach Anspruch 1, die weiterhin eine Benutzerschnittstellen-Erzeugungseinheit (50) umfasst, die konfiguriert ist, um auf einer Anzeigeeinheit (60) anzuzeigende Benutzerschnittstelleninformationen zu erzeugen, wobei der Controller (25) konfiguriert ist, um die Benutzerschnittstellen-Erzeugungseinheit (50) so zu steuern, dass sie ein Ergebnis aus dem Identifikationsdaten-Überprüfungsvorgang auf der Anzeigeeinheit (60) anzeigt.

5. Anzeigevorrichtung (400) nach Anspruch 1, wobei die erste Speichereinheit (15) und die zweite Speichereinheit (17) zwei unabhängigen Regionen in einer einzigen Speicherkonfiguration entsprechen.

6. Anzeigevorrichtung (400) nach Anspruch 1, wobei die zweite Speichereinheit (17) von dem Controller (25) umfasst ist.

7. Anzeigevorrichtung (400) nach Anspruch 1, wobei die Vergleichsprüfdaten eine Prüfsumme umfassen.

8. Anzeigevorrichtung (400) nach Anspruch 1, wobei die Anzeigeidentifikationsdaten erweiterte Anzeigeidentifikationsdaten (EDID: Extended Display Identification Data) umfassen.

9. Steuerverfahren für eine Anzeigevorrichtung (400), wobei die Vorrichtung eine erste Speichereinheit (15), die Anzeigeidentifikationsdaten und aus den Anzeigeidentifikationsdaten gewonnene Vergleichsprüfdaten speichert, und eine zweite Speichereinheit (17) umfasst, wobei das Verfahren umfasst:
Berechnen von Kontrollprüfdaten aus den Anzeigeidentifikationsdaten, die in der ersten Speichereinheit (15) gespeichert sind;
Überprüfen der Anzeigeidentifikationsdaten, die in der ersten Speichereinheit (15) gespeichert sind, durch Vergleichen der Kontrollprüfdaten und der Vergleichsprüfdaten aus der ersten Speichereinheit (15), um festzustellen, ob ein Fehler in den Anzeigeidentifikationsdaten auftritt, die in der ersten Speichereinheit (15) gespeichert sind; und
Speichern der Anzeigeidentifikationsdaten und der Vergleichsprüfdaten, die in der zweiten Speichereinheit (17) gesichert sind, in der ersten Speichereinheit (15), falls ein Fehler festgestellt wird;
**gekennzeichnet durch** Sichern der Anzeigeidentifikationsdaten und der Vergleichsprüfdaten, wenn eine externe Vorrichtung an die Anzeigevorrichtung (400) angeschlossen wird und die Anzeigeidentifikationsdaten zum ersten Mal abfragt;
wobei die erste und die zweite Speichereinheit (15, 17) elektrisch löschbare und programmierbare Nurlesespeicher (EEPROMs) sind.

10. Steuerverfahren nach Anspruch 9, wobei das Überprüfen der Identifikationsdaten jeweils nach einer vorgegebenen Zeitspanne durchgeführt wird.

11. Steuerverfahren nach Anspruch 9, das weiterhin das Erzeugen von Benutzerschnittstelleninformationen umfasst, so dass ein Ergebnis aus der Überprüfung der Identifikationsdaten auf einer Anzeigeeinheit (60) angezeigt wird.

12. Steuerverfahren nach einem der Ansprüche 9 - 11, wobei die Anzeigevorrichtung (400) einen Teil (30) zum Anschluss einer externen Vorrichtung umfasst; und das Steuerverfahren weiterhin das Sperren eines Zugriffs der externen Vorrichtung auf die erste Speichereinheit (15) umfasst, wenn der Teil (30) zum Anschluss einer externen Vorrichtung an die externe Vorrichtung angeschlossen wird und der Identifikationsdaten-Überprüfungsvorgang beginnt.

13. Steuerverfahren nach Anspruch 9, das weiterhin das Erzeugen von Benutzerschnittstelleninformationen umfasst, so dass ein Ergebnis aus der Überprüfung der Identifikationsdaten auf einer Anzeigeeinheit (60) angezeigt wird.

14. Steuerverfahren nach einem der Ansprüche 9 - 13, wobei die Vergleichsprüfdaten eine Prüfsumme umfassen.

15. Steuerverfahren nach einem der Ansprüche 9 - 14, wobei die Anzeigeidentifikationsdaten erweiterte Anzeigeidentifikationsdaten(EDID: Extended Display Identification Data) umfassen.

## Revendications

1. Appareil d'affichage (400) comprenant :
une première unité de mémorisation (15) configurée pour mémoriser une donnée d'identification d'affichage et une donnée de vérification comparative tirée de la donnée d'identification d'affichage, ladite première unité de mémorisation (15) pouvant faire l'objet d'un accès par un appareil externe ;
une seconde unité de mémorisation (17) configurée pour mémoriser une sauvegarde de la donnée d'identification d'affichage et de la donnée de vérification comparative, l'accès à ladite seconde unité de mémorisation (17) effectué par ledit appareil externe étant bloqué ; et
un organe de commande (25) configuré pour réaliser un processus de vérification de donnée d'identification pour déterminer s'il se trouve une erreur dans la donnée d'identification d'affichage mémorisée dans la première unité de mémorisation (15) et pour mettre en mémoire, dans la première unité de mémorisation (15), la donnée d'identification d'affichage et la donnée de vérification comparative sauvegardées dans la seconde unité de mémorisation (17) si une erreur est déterminée ; l'organe de commande (25) étant configuré pour calculer une donnée de vérification d'inspection à partir de la donnée d'identification d'affichage mémorisée dans la première unité de mémorisation (15) et pour comparer la donnée de vérification d'inspection à la donnée de vérification comparative mémorisée dans la première unité de mémorisation (15) afin d'inspecter s'il se trouve ladite erreur dans la donnée d'identification d'affichage ;
**caractérisé en ce que** l'organe de commande (25) est en outre configuré pour sauvegarder dans la seconde unité de mémorisation (17) la donnée d'identification d'affichage et la donnée de vérification comparative mémorisées dans la première unité de mémorisation (15) lorsque ledit appareil externe est connecté à l'appareil d'affichage (400) et qu'il demande ladite donnée d'identification d'affichage pour la première fois ;
les première et seconde unités de mémorisation (15, 17) étant des mémoires mortes effaçables et programmables électriquement (EEPROM).

2. Appareil d'affichage (400) selon la revendication 1, comprenant en outre une partie de connexion d'appareil externe (30) configurée pour connecter ledit appareil externe pour fournir un signal vidéo.

3. Appareil d'affichage (400) selon la revendication 2, dans lequel la partie de connexion d'appareil externe est configurée pour fournir un signal vidéo numérique, et l'organe de commande (25) est configuré pour bloquer l'accès de l'appareil externe à la première unité de mémorisation (15) si le processus de vérification de donnée d'identification débute.

4. Appareil d'affichage (400) selon la revendication 1, comprenant en outre une unité de génération d'interface utilisateur (50) configurée pour générer une information d'interface utilisateur à afficher sur une unité d'affichage (60), l'organe de commande (25) étant configuré pour commander l'unité de génération d'interface utilisateur (50) en vue de l'affichage d'un résultat issu du processus de vérification de donnée d'identification sur l'unité d'affichage (60).

5. Appareil d'affichage (400) selon la revendication 1, dans lequel la première unité de mémorisation (15) et la seconde unité de mémorisation (17) désignent deux zones indépendantes d'une seule configuration de mémorisation.

6. Appareil d'affichage (400) selon la revendication 1, dans lequel la seconde unité de mémorisation (17) se compose de l'organe de commande (25).

7. Appareil d'affichage (400) selon la revendication 1, dans lequel la donnée de vérification comparative comprend une somme de contrôle.

8. Appareil d'affichage (400) selon la revendication 1, dans lequel la donnée d'identification d'affichage comprend une donnée d'identification d'affichage étendue (EDID).

9. Procédé de commande d'un appareil d'affichage (400), l'appareil comprenant une première unité de mémorisation (15) qui mémorise une donnée d'identification d'affichage et une donnée de vérification comparative tirée de la donnée d'identification d'affichage, et une seconde unité de mémorisation (17), le procédé comprenant :
le calcul d'une donnée de vérification d'inspection à partir de la donnée d'identification d'affichage mémorisée dans la première unité de mémorisation (15) ; et
la vérification de la donnée d'identification mémorisée dans la première unité de mémorisation (15) en comparant la donnée de vérification d'inspection et la donnée de vérification comparative issues de la première unité de mémorisation (15) pour déterminer si une erreur se produit dans la donnée d'identification d'affichage mémorisée dans la première unité de mémorisation (15) ; et
la mémorisation, dans la première unité de mémorisation (15), de la donnée d'identification d'affichage et de la donnée de vérification comparative sauvegardées dans la seconde unité de mémorisation (17) si une erreur est déterminée ;
**caractérisé par** la sauvegarde de la donnée d'identification d'affichage et de la donnée de vérification comparative lorsque un appareil externe est en cours de connexion à l'appareil d'affichage (400) et qu'il demande ladite donnée d'identification d'affichage pour la première fois ;
dans lequel les première et seconde unités de mémorisation (15, 17) sont des mémoires mortes effaçables et programmables électriquement (EEPROM).

10. Procédé de commande selon la revendication 9, dans lequel la vérification de la donnée d'identification est réalisée par périodes prédéterminées.

11. Procédé de commande selon la revendication 9, comprenant en outre la génération d'une information d'interface utilisateur de manière qu'un résultat issu de la vérification de la donnée d'identification soit affiché sur l'unité d'affichage (60).

12. Procédé de commande selon l'une quelconque des revendications 9 à 11, dans lequel l'appareil d'affichage (400) comprend une partie de connexion d'appareil externe (30) ; et le procédé de commande comprend en outre le blocage de l'accès d'un appareil externe à la première unité de mémorisation (15) lorsque la partie de connexion d'appareil externe (30) est connectée à l'appareil externe et que le processus de vérification de donnée d'identification débute.

13. Procédé de commande selon la revendication 9, comprenant en outre la génération d'une information d'interface utilisateur de manière qu'un résultat issu de la vérification de la donnée d'identification soit affiché sur une unité d'affichage (60).

14. Procédé de commande selon l'une quelconque des revendications 9 à 13, dans lequel la donnée de vérification comparative comprend une somme de contrôle.

15. Procédé de commande selon l'une quelconque des revendications 9 à 14, dans lequel la donnée d'identification d'affichage comprendune donnée d'identification d'affichage étendue (EDID).
